# EUROPEAN PATENT SPECIFICATION

(11) **EP 0 962 431 B1**
(45) Date of publication and mention of the grant of the patent: **17.11.2004**
(21) Application number: 99304084.9
(22) Date of filing: 26.05.1999
(51) Int. Cl.: C04B 41/50, C04B 41/00, C23C 24/08

(54) **Methods of treating preform elements**
Methode zur Behandlung vorgefertigter Formteile
Procédé de traitement d'elements preformés

(30) Priority: 27.05.1998 GB 9811213
(43) Date of publication of application: 08.12.1999
(73) Proprietor: Camco International (UK) Limited, Stonehouse, Gloucestershire GL10 3RQ (GB)
(72) Inventor: Griffin, Nigel Dennis, Whitminster, Gloucestershire (GB)
(74) Representative: Bailey, Richard Alan

(56) References cited:
- EP-A- 0 550 763
- EP-A- 0 589 641
- PATENT ABSTRACTS OF JAPAN vol. 015, no. 500 (C-0895), 18 December 1991 (1991-12-18) & JP 03 219079 A (MITSUBISHI MATERIALS CORP), 26 September 1991 (1991-09-26)
- GUSEVA M B ET AL: "High quality diamond films on WC-Co surfaces" DIAMOND AND RELATED MATERIALS, vol. 6, no. 1, 1 January 1997 (1997-01-01), page 89-94 XP004061149 ISSN: 0925-9635
- PATENT ABSTRACTS OF JAPAN vol. 017, no. 655 (C-1136), 6 December 1993 (1993-12-06) & JP 05 209274 A (IDEMITSU PETROCHEM CO LTD), 20 August 1993 (1993-08-20)

## Description

The invention relates to preform elements of the kind comprising a facing table of polycrystalline diamond bonded to a substrate of cemented tungsten carbide.

Preform elements of this kind are often used as cutting elements in rotary drag-type drill bits, and formation-engaging inserts on roller cone and percussive bits, and the present invention is particularly applicable to the treatment of such preform elements before they are mounted on the drill bit. However, the invention is not restricted to elements for this particular use. For example, preform elements of the kind referred to may also be employed in workpiece-shaping tools, high pressure nozzles, wire-drawing dies, bearings and other parts subject to sliding wear, as well as elements subject to percussive loads as may be the case in tappets, cams, cam followers, and similar devices in which a surface of high wear-resistance is required.

Preform elements of the kind to which the invention relates are generally manufactured by pre-forming a substrate in the appropriate required shape from compacted powdered material, applying one or more layers of diamond particles to the surface ofthe substrate and then subjecting the substrate and diamond layer to very high pressure and temperature in a forming press so that the substrate material sinters, the diamond particles bond together with diamond-to-diamond bonding, and the diamond layer bonds to the substrate. This manufacturing process is well known and will not be described in detail.

In drag-type drill bits each preform cutting element may be mounted on a carrier in the form of a generally cylindrical stud or post received in a socket in the body of the drill bit. The carrier is often formed from cemented tungsten carbide, the surface of the substrate being brazed to a surface on the carrier, for example by a process known as "LS bonding". In this process the diamond facing layer is cooled while the surface of the substrate is brazed to the carrier. The reason for this is that the polycrystalline diamond facing table is not thermally stable above about 725°C and will begin to graphitise. The cooling of the facing table is therefore necessary, since the brazing process would otherwise raise the temperature of the preform element above this critical temperature.

In the case of some types of cutter for drag-type drill bits, and also in inserts for roller cone bits, the substrate ofthe preform element is of sufficient axial length that the substrate itself may be secured directly within a socket in the bit body or in a roller cone.

Preform elements used in drill bits are subject to high temperatures and heavy loads when the drill bit is in use down a borehole. It is found that as a result of such conditions cracking of the substrate can occur. Also, spalling and delamination of the polycrystalline diamond facing table can occur, that is to say the separation and loss of diamond from the facing table, in particular as a result of failure of the interface between the diamond table and substrate. This may also occur in preform elements used for other purposes and particularly where the elements are subjected to repetitive percussive loads, as in tappets and cam mechanisms. It is believed that the tendency for cracking, spalling and delamination to occur depends in part on the residual stresses which are left in the preform element at the end of the process of forming the element and fitting it to the bit body. It is therefore common practice to heat-treat the preform elements after formation in the press and before mounting on the bit body in order to relieve some of the residual stresses in the element and thereby reduce the tendency of the elements to crack or delaminate in use.

One common method ofheat treatment, designed to achieve thermal stress relief, is to maintain the preform elements at temperatures of up to 500°C for a considerable extended period, for example up to 48 hours. However, while this is believed to have some stress relieving effect, subsequent cracking and delamination of the preform elements may still subsequently occur.

EP 0589641 describes a heat treatment technique for components upon which a layer of diamond has been deposited using a CVD technique. The heat treatment technique involves maintaining the components at elevated temperatures for relatively long periods.

The present invention provides a new form of heat treatment for preform elements which may not only achieve more effective thermal stress management, but which also reduces the time cycle for manufacturing each element and thus enables output to be increased.

According to a first aspect ofthe invention there is provided a method of treating a preform element having a facing table of polycrystalline diamond bonded to a substrate of tungsten carbide, the method comprising the steps of:
(a) heating the element to a soaking temperature in the range of 550-700°C,
(b) maintaining the temperature of the element in said range for a period of at least one hour, and
(c) cooling the element to ambient temperature, the temperature being reduced gradually over a period of three to four hours.

As previously mentioned the substrate comprises cemented tungsten carbide, that is to say tungsten carbide particles in a binder phase, and it is believed that the method of the invention, where the temperature of the element is maintained above 550°C for at least an hour, causes stable phases to precipitate within the binder phase of the carbide substrate. Thus, the effect of the method, which is effectively a stabilisation cycle, is to relieve internal stresses in the element, to prevent such internal stresses causing cracking in the substrate, i.e. it toughens the substrate material.

In step (a), the temperature of the element may raised to a value in the range of 550-625°C, and preferably in the range of 575-620°C. In a most preferred embodiment the temperature of the element is raised to about 600°C.

The temperature of the element may be maintained in said range for a period of about one hour, or for a period of at least two hours, depending on the nature of the preform element. As will be explained, in some cases the temperature of the element may be maintained in said range for a period of up to 18 hours or up to 36 hours.

In the heating step (a), the temperature of the element is preferably raised to the soaking temperature gradually, for a period in the range of one half to one and a half hours, typically for a period of about one hour.

Steps (a) and (b) are preferably effected in a non-oxidising atmosphere.

In the cooling step (c), the element may be allowed to cool gradually to about 200°C, then being quenched to bring it to ambient temperature.

The method maybe applied to preform cutting elements for rotary drag-type drill bits, where the facing table of the preform element has a substantially flat front face, a peripheral surface, and a rear surface bonded to the front surface of the substrate.

The method is also applicable to inserts for roller cone bits, where the facing table of the preform element has a generally convexly domed front face, and a generally concave rear surface bonded to a generally convexly domed front surface of the substrate. In this case the facing table of the preform element may often comprise a plurality of layers of polycrystalline diamond.

The method according to this first aspect of the invention will reduce the tendency of the substrate to crack and it may also have the effect of inhibiting delamination. However in some cases both the tendency to crack or to delaminate may be further inhibited by subjecting the element to a second, flash heating, step.

The method may therefore, include the additional steps of
(d) heating the element to a temperature above 725°C,
(e) maintaining the temperature of the element above 725°C for a period not exceeding five seconds, and
(f) cooling the element to ambient temperature.

It will be noted that in this second step of the heat treatment the element is heated to a temperature which is greater than the temperature at which the polycrystalline diamond will normally begin to graphitise. However, according to this aspect of the invention the temperature is raised above this critical temperature for only a very short period, no more than five seconds, and it is found that the activation energy resulting from such temporary overheating of the diamond layer is insufficient to initiate graphitisation of the diamond, but is sufficient to relieve residual stress in the element by plastic deformation. This greatly toughens the material.

The first steps (a), (b) and (c) of the heat treatment may have any of the parameters referred to above. Steps (d) and (e) may also be effected in a non-oxidising atmosphere.

Preferably in step (d) the element is heated to a temperature above 750°C. The temperature to which the element is heated is preferably below about 850°C.

In step (e) the temperature of the element is preferably maintained above 725°C for a period of about four seconds.

The following is a more detailed description of embodiments of the invention, reference being made to the accompanying drawings in which:
Figure 1 is a diagrammatic sectional view of a typical preform element for use as a cutting element in a rotary drag-type drill bit,
Figure 2 is a graph representing a typical stabilisation cycle of the heat treatment according to the present invention,
Figure 3 is a graph illustrating a flash heating cycle of the treatment according to the present invention,
Figure 4 is a diagrammatic sectional view of a domed preform element for use as an insert on a roller cone drill bit,
Figure 5 is a graph representing a stabilisation cycle (not in accordance with the invention) for the heat treatment of an insert of the kind shown in Figure 4,
Figure 6 is a diagram showing the increase in spalling threshold of the inserts after stabilisation, and
Figure 7 is a diagram illustrating the change in failure modes of the inserts after stabilisation.

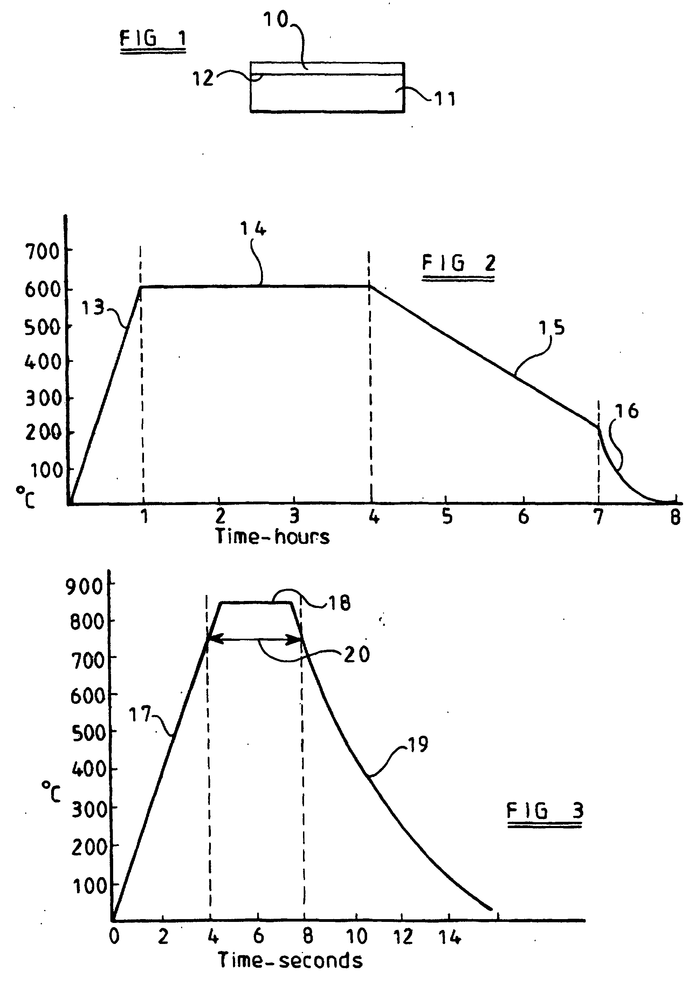

Referring to Figure 1, a typical preform cutting element for a drag-type rotary drill bit comprises a thin facing table 10 of polycrystalline diamond bonded to a substrate 11 of cemented tungsten carbide. When used as cutters in rotary drag-type drill bits, such elements are often in the form of circular or part-circular tablets although other shapes are possible. In Figure 1 the interface 12 between the facing table 10 and substrate 11 is shown as flat but it is also common practice to preform the substrate 11 so as to provide an interface which is non-planar and configured, thereby providing some mechanical interlocking between the facing table and substrate. Also, there may be provided a transition layer between the facing table and substrate, such transition layer having characteristics intermediate those of the facing table and substrate. For example, the coefficient of thermal expansion of the material of the substrate is substantially greater than that of the facing table, and the transition layer will therefore normally have a coefficient of thermal expansion which is intermediate the coefficients of the two other materials so as to reduce stresses which would otherwise arise during heating and cooling of the element.

Figure 2 shows a typical stabilisation heating cycle comprising steps (a) to (c) of the present invention.

Referring to Figure 2, the graph plots temperature against time. The first portion 13 of the graph shows the gradual heating of the preform element over a period of one hour so as to raise its temperature to about 600°C. As shown by section 14 of the graph, the element is then maintained at the temperature of 600°C for about two hours. As indicated by section 15 of the graph, the element is then allowed to cool gradually to about 200°C over a period of about three hours and is then quenched to ambient temperature, as indicated by section 16 of the graph.

Although in this example the element is maintained at a temperature of about 600°C, advantage may also be obtained by maintaining the element at a temperature anywhere in the range of 550-700°C, as previously described.

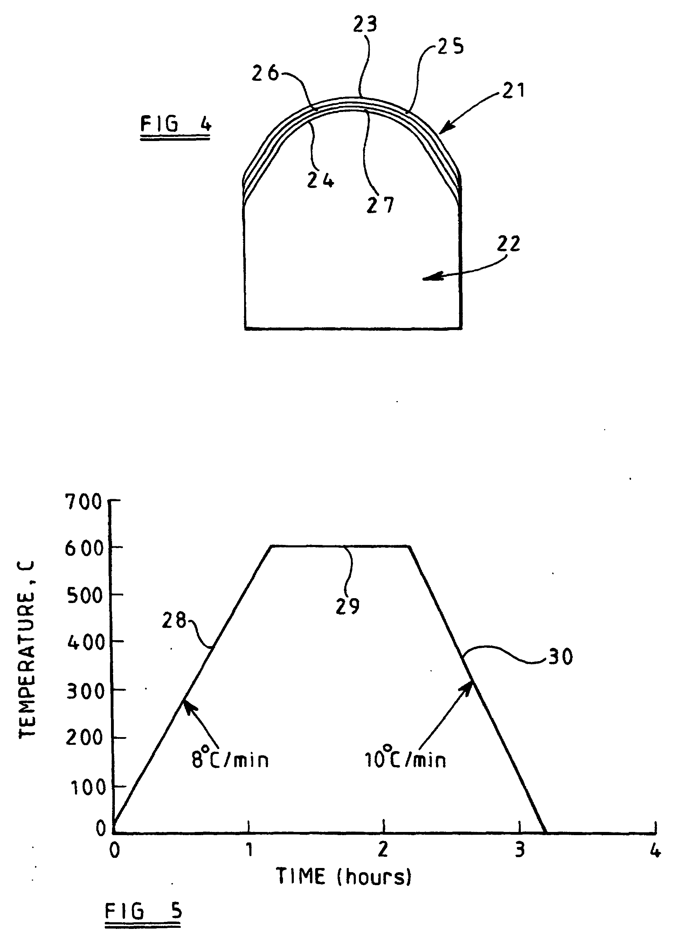

As previously mentioned, the heating and cooling stabilisation cycle just described can be advantageous in stress management when used alone. However, the element may also be subsequently passed through a flash heating cycle as illustrated by the graph in Figure 3. In this cycle the element is heated rapidly, as indicated by section 17 ofthe graph, to a temperature above 750°C, for example about 850°C. It is held at that temperature for only a very short period, as indicated at 18, and is then cooled rapidly to ambient temperature as indicated at 19. The heating and cooling is such that the period for which the element is above 750°C is about four seconds as indicated at 20 on the graph.

Preferably the heating in the stabilisation cycle and/or in the flash heating cycle is effected in a non-oxidising atmosphere. The flash heating cycle illustrated in Figure 3 may be effected by rapid induction heating, by use of laser heating or by any other appropriate heating means. The temperature of the element may be determined by an infra-red temperature sensing device.

The flash heating cycle may also be advantageous in relieving stress in the preform element when used alone, without being preceded by the stabilisation heating cycle.

The methods specifically described above employ particular parameters of the method according to the invention which are found to be particularly effective in reducing the tendency ofthe preform element to crack or delaminate in subsequent use, but advantage in this respect may also be obtained by using parameters in any of the ranges previously specified.

As previously mentioned, the methods according to the invention are also applicable to the heat treatment of PDC (polycrystalline diamond compact) inserts for use in roller cone drill bits. Such PDC inserts differ from cutters of the types normally used in drag-type drill bits in that the inserts use multiple diamond layers, employ different compositions of tungsten carbide in the substrate and of polycrystalline diamond in the facing table, and also differ in shape. For example, the facing table of a PDC enhanced insert for a roller cone bit may have a generally convexly domed front face, and a generally concave rear surface bonded to a convexly domed front surface of the substrate.

Figure 4 is a diagrammatic section through a typical domed preform element, of a kind to which the present invention is applicable, and for use as an insert on a roller cone drill bit. The insert comprises a three layer facing table 21, incorporating polycrystalline diamond, bonded to a substrate 22 of cemented tungsten carbide. It will be seen that the facing table 21 of the insert has a generally convexly domed front face 23, and a generally concave rear surface 24 bonded to a generally convexly domed front surface of the substrate 22.

The layers in the facing table 21 may be of any suitable polycrystalline diamond containing composition, as is well known in the art, and the particular composition of the layers, and the number of layers, does not form a part ofthe present invention. However, in one particular type of insert the outermost layer 25 may comprise a high proportion of polycrystalline diamond, say about 83% by weight, the balance being tungsten carbide and cobalt. The intermediate layer 26 may comprise about 55% polycrystalline diamond and 36% tungsten carbide, the balance being cobalt. The innermost layer 27 of the facing table is a transition layer and may comprise about 30% polycrystalline diamond and 62% tungsten carbide. The substrate 22 comprises mostly tungsten carbide with a small proportion (typically about 6% by weight) of a cobalt binder.

The shape and composition of the insert shown in Figure 4 are by way of example only and the invention is applicable to roller cone bit inserts of this general type, but of other shapes of the element and other compositions of the substrate and the diamond facing table.

The differences between such inserts and preform cutting elements for rotary drag-type drill bits, of the general kind shown in Figure 1, influence residual stress development and, potentially, response to stress modification by heat treatment after manufacture. Accordingly, the parameters for heat treatment of roller-cone bit inserts according to the present invention may differ from the particular parameters suitable for stress modification in preform cutting elements for drag-type drill bits.

In particular, it has been found that round top PDC inserts for roller cone bits, when vacuum-stabilised at 600°C for one hour, exhibit a dramatic increase in average spalling threshold when compared with inserts which have not been so heat treated.

Figure 5 shows a typical stabilisation heating cycle (not in accordance with the invention) suitable for inserts of the kind shown in Figure 4. The graph plots temperature in °C against time in hours. The first portion 28 of the graph shows the gradual heating of the insert over a period of about 72 minutes so as to raise its temperature to about 600°C. During this period the temperature of the insert rises at about 8°C/min. As shown by section 29 of the graph, the insert is then maintained at the temperature of 600°C for about one hour. As indicated by section 30 of the graph, the element is then allowed to cool gradually, at about 10°C/min to ambient temperature.

The desired parameters for effective thermal stabilisation treatment of PDC inserts for roller cone bits were determined by carrying out analytical testing of such inserts, as will be described.

In a first set of tests, 100 round top PDC inserts ("as-sintered") were selected and samples from this group were selected at random for the tests described below.

Eleven inserts from this group were stabilised at 600°C for one hour in a vacuum. After stabilisation, ten ofthe stabilised inserts and ten of the as-sintered inserts were drop tested. The remaining sample was compared metallographically with an as-sintered insert, both being evaluated in centreline section at the PDC interface at 1500X in etched and unetched conditions.

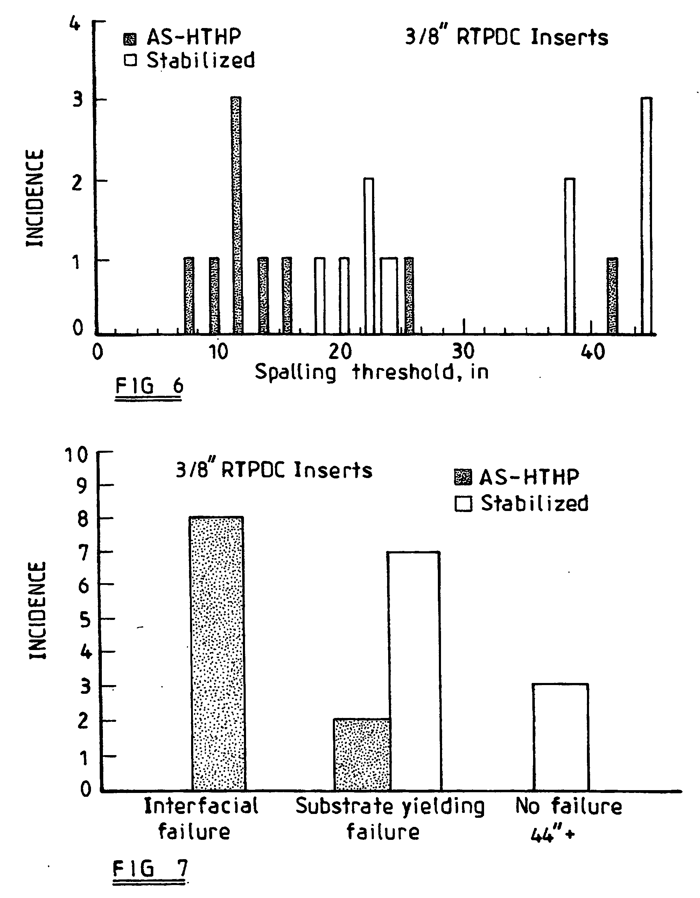

In these tests, the round top PDC inserts which had been vacuum-stabilised at 600°C for one hour showed a dramatic increase in average spalling threshold, when compared with un-stabilised inserts. As shown in Figure 6, the minimum spalling threshold was doubled, and the distribution was similarly shifted, including 30% of the population with no failure at the maximum impact energy. In addition, the stabilisation treatment shifted failure modes, as shown in Figure 7, from interfacial cracking to substrate yielding.

No microstructural changes due to the heat stabilisation treatment were apparent by optical metallography.

EDS X-ray chemical analysis scans conducted on the substrate region of a PDC insert near the second diamond layer interface revealed only tungsten, cobalt and carbon signals, and no impurity elements were detected. X-ray diffraction results from the same interface region showed that structural changes in the cobalt binder phase occurred during the manufacturing high temperature high pressure cycle and also during subsequent stabilisation. In the as-sintered substrate the cobalt binder comprises both FCC (face centred cubic) and HCP (hexagonal close packed) phases, and reflects lattice dilation (peak shifts) due to tungsten solution and peak broadening attributable to particle size and/or strain distribution.

The high temperature high pressure processing during manufacture of the inserts substantially reduces the HCP binder constituent in the interface region. However, stabilisation at 600°C for one hour converts some of the FCC cobalt to HCP.

In summary, therefore, it was found that stabilisation of the PDC inserts at 600°C for one hour dramatically increased the impact resistance of the PDC inserts. This increase was associated with a change in failure mode from interfacial cracking to substrate yielding/circumferential spalling, with or without radial splitting. The interfacial failure mode was observed only on unstabilised parts. i.e. inserts not subjected to heat treatment according to the invention, and was associated with low impact energies. When yielding failure occurred in parts from the unstabilised group, it was associated with high impact energies. These correlations suggest that heat stabilisation affects the interfacial regions in ways which increase the applied stress threshold for crack nucleation.

Possible mechanisms of "interface strengthening" include residual stress redistribution and microstructural toughening. Metallographic results argue against the latter mechanism, since no stabilisation-triggered precipitation or phase transformations were apparent in the interface zone.

Diffraction data showed that binder phase relationships in the zone adjacent the PDC interface are altered by both high temperature/high pressure and stabilisation processes.

In the as-sintered substrate, both HCP and (metastable) FCC cobalt phases are represented in the binder. This condition is normal in tungsten carbide-cobalt cemented carbides and it is further known that external stress can trigger progressive FCC-HCP transformation via a martensitic mechanism. High temperature/high pressure processing results in retention of a greater proportion of FCC binder phase in the near-interface substrate region and high tungsten solute levels. During stabilisation at 600°C for one hour, some of this FCC cobalt transforms to HCP under the influence of the interfacial stress gradient, although not to as-sintered substrate levels. Differences in the interface binder phase relationship and in residual stress development between as-sintered and stabilised specimens may arise due to great distinctions in external stress state (i.e. in the cell pressure path vs. free).

For the types of PDC insert tested in the above study, 600°C appeared to be the maximum safe stabilisation temperature. However, it appeared that while a one hour stabilisation period provided good results, a heating period of up to three hours duration could provide some additional recovery.

## Claims

1. A method of treating a preform element having a facing table (10) of polycrystalline diamond bonded to a substrate (11) of cemented tungsten carbide to toughen the substrate the method comprising the steps of
(a) heating the element to a soaking temperature in the range of 550-700°C,
(b) maintaining the temperature of the element in said range for a period of at least one hour, and being **characterised by** a step of
(c) cooling the element to ambient temperature, the temperature of the element being reduced gradually from the soaking temperature over a period in the range of three to four hours.

2. A method according to Claim 1, wherein, in step (a), the temperature of the element is raised to a value in the range of 550-625°C.

3. A method according to Claim 1, wherein, in step (a), the temperature of the element is raised to a value in the range of 575-620°C.

4. A method according to Claim 1, wherein, in step (a), the temperature of the element is raised to about 600°C.

5. A method according to any of Claims 1 to 4, wherein, in step (b), the temperature of the element is maintained in said range for a period of about one hour.

6. A method according to any of Claims 1 to 4, wherein, in step (b), the temperature of the element is maintained in said range for a period of at least two hours.

7. A method according Claim 6, wherein, in step (b), the temperature of the element is maintained in said range for a period of up to 18 hours.

8. A method according Claim 6, wherein, in step (b), the temperature of the element is maintained in said range for a period of up to 36 hours.

9. A method according to any of the preceding claims wherein, in the heating step (a), the temperature of the element is raised to the soaking temperature gradually, for a period in the range of one half to one and a half hours.

10. A method according to Claim 9, wherein, in the heating step (a), the temperature of the element is raised to the soaking temperature gradually for a period of about one hour.

11. A method according to any of the preceding claims, wherein at least steps (a) and (b) are effected in a non-oxidising atmosphere.

12. A method according to any one of the preceding claims, wherein, in step (c), the element is allowed to cool gradually to about 200°C, then being quenched to bring it to ambient temperature.

13. A method according to any of the preceding claims, wherein the facing table (10) ofthe preform element has a substantially flat front face, a peripheral surface, and a rear surface (12) bonded to the front surface of the substrate (11).

14. A method according to any of the preceding claims, wherein the facing table (21) of the preform element has a generally convexly domed front face (23), and a generally concave rear surface bonded to a generally convexly domed front surface (24) of the substrate (22).

15. A method according to Claim 14, where the facing table (21) of the preform element comprises a plurality of layers (25, 26, 27) of polycrystalline diamond.

16. A method according to any one of the preceding claims, further comprising the additional steps of:
(d) heating the element to a temperature above 725°C,
(e) maintaining the temperature of the element above 725°C for a period not exceeding five seconds, and
(f) cooling the element to ambient temperature.

17. A method according to Claim 16 wherein, in step (d), the element is heated to a temperature above 750°C and below about 850°C.

18. A method according to Claim 16 wherein, in step (e), the temperature of the element is maintained above 725°C for about four seconds.

19. A method according to any of Claims 16 to 18, wherein at least steps (d) and (e) are effected in a non-oxidising atmosphere.

## Patentansprüche

1. Verfahren zur Behandlung eines Vorformelementes mit einer Belagplatte (10) aus polykristallinem Diamant, die mit einem Träger (11) aus Wolframkarbidhartmetall verbunden ist, um den Träger zu härten, wobei das Verfahren die folgenden Schritte aufweist:
(a) Erwärmen des Elementes auf eine Durchwärmtemperatur im Bereich von 550 bis 700 °C,
(b) Aufrechterhalten der Temperatur des Elementes in dem Bereich über eine Zeitdauer von mindestens einer Stunde und **gekennzeichnet ist durch** einen Schritt des
(c) Abkühlens des Elementes auf Umgebungstemperatur, wobei die Temperatur des Elementes allmählich von der Durchwärmtemperatur über eine Zeitdauer im Bereich von drei bis vier Stunden verringert wird.

2. Verfahren nach Anspruch 1, bei dem beim Schritt (a) die Temperatur des Elementes auf einen Wert im Bereich von 550 bis 625 °C angehoben wird.

3. Verfahren nach Anspruch 1, bei dem beim Schritt (a) die Temperatur des Elementes auf einen Wert im Bereich von 575 bis 620 °C angehoben wird.

4. Verfahren nach Anspruch 1, bei dem beim Schritt (a) die Temperatur des Elementes auf etwa 600 °C angehoben wird.

5. Verfahren nach einem der Ansprüche 1 bis 4, bei dem beim Schritt (b) die Temperatur des Elementes in dem Bereich über eine Zeitdauer von etwa eine Stunde aufrechterhalten wird.

6. Verfahren nach einem der Ansprüche 1 bis 4, bei dem beim Schritt (b) die Temperatur des Elementes in dem Bereich über eine Zeitdauer von mindestens zwei Stunden aufrechterhalten wird.

7. Verfahren nach Anspruch 6, bei dem beim Schritt (b) die Temperatur des Elementes in dem Bereich über eine Zeitdauer von bis zu 18 Stunden aufrechterhalten wird.

8. Verfahren nach Anspruch 6, bei dem beim Schritt (b) die Temperatur des Elementes in dem Bereich über eine Zeitdauer von bis zu 36 Stunden aufrechterhalten wird.

9. Verfahren nach einem der vorhergehenden Ansprüche, bei dem beim Erwärmungsschritt (a) die Temperatur des Elementes auf eine Durchwärmtemperatur allmählich über eine Zeitdauer im Bereich von einer halben Stunde bis anderthalb Stunden angehoben wird.

10. Verfahren nach Anspruch 9, bei dem beim Erwärmungsschritt (a) die Temperatur des Elementes auf die Durchwärmtemperatur allmählich über eine Zeitdauer von etwa einer Stunde angehoben wird.

11. Verfahren nach einem der vorhergehenden Ansprüche, bei dem mindestens die Schritte (a) und (b) in einer nichtoxidierenden Atmosphäre bewirkt werden.

12. Verfahren nach einem der vorhergehenden Ansprüche, bei dem beim Schritt (c) das Element allmählich auf etwa 200 °C abkühlen darf, wobei es danach abgeschreckt wird, um es auf Umgebungstemperatur zu bringen.

13. Verfahren nach einem der vorhergehenden Ansprüche, bei dem die Belagplatte (10) des Vorformelementes eine im wesentlichen flache Vorderfläche, eine Umfangsfläche und eine Hinterfläche (12) aufweist, die mit der Vorderfläche des Trägers (11) verbunden ist.

14. Verfahren nach einem der vorhergehenden Ansprüche, bei dem die Belagplatte (21) des Vorformelementes eine im allgemeinen konvex gewölbte Vorderfläche (23) und eine im allgemeinen konkave Hinterfläche aufweist, die mit einer im allgemeinen konvex gewölbten Vorderfläche (24) des Trägers (22) verbunden ist.

15. Verfahren nach Anspruch 14, bei dem die Belagplatte (21) des Vorformelementes eine Vielzahl von Schichten (25, 26, 27) aus polykristallinem Diamant aufweist.

16. Verfahren nach einem der vorhergehenden Ansprüche, das außerdem die folgenden zusätzlichen Schritte aufweist:
(d) Erwärmen des Elementes auf eine Temperatur über 725 °C;
(e) Aufrechterhalten der Temperatur des Elementes über 725 °C über eine Zeitdauer, die nicht fünf Sekunden übersteigt; und
(f) Abkühlen des Elementes auf Umgebungstemperatur.

17. Verfahren nach Anspruch 16, bei dem beim Schritt (d) das Element auf eine Temperatur über 750 °C und unterhalb etwa 850 °C erwärmt wird.

18. Verfahren nach Anspruch 16, bei dem beim Schritt (e) die Temperatur des Elementes über 725 °C über etwa vier Sekunden aufrechterhalten wird.

19. Verfahren nach einem der Ansprüche 16 bis 18, bei dem mindestens die Schritte (d) und (e) in einer nichtoxidierenden Atmosphäre bewirkt werden.

## Revendications

1. Procédé de traitement d'un élément d'ébauche comportant une table de dressage (10) en diamant polycristallin reliée à un substrat (11) de carbure de tungstène métallique pour renforcer le substrat, le procédé comprenant les étapes ci-dessous:
(a) chauffage de l'élément à une température de trempe comprise dans l'intervalle allant de 550 à 700°C,
(b) maintien de la température de l'élément dans ledit intervalle pendant une période d'au moins une heure, et étant **caractérisé par** l'étape ci-dessous:
(c) refroidissement de l'élément à la température ambiante, la température de l'élément étant réduite progressivement de la température de trempe pendant une période de trois à quatre heures.

2. Procédé selon la revendication 1, dans lequel la température de l'élément est accrue à une valeur comprise dans l'intervalle allant de 550 et 625°C au cours de l'étape (a).

3. Procédé selon la revendication 1, dans lequel la température de l'élément est accrue à une valeur comprise dans l'intervalle allant de 575 à 620°C au cours de l'étape (a).

4. Procédé selon la revendication 1, dans lequel la température de l'élément est accrue à environ 600°C au cours de l'étape (a).

5. Procédé selon l'une quelconque des revendications 1 à 4, dans lequel la température de l'élément est maintenue dans ledit intervalle pendant une période d'environ une heure au cours de l'étape (b).

6. Procédé selon l'une quelconque des revendications 1 à 4, dans lequel la température de l'élément est maintenue dans ledit intervalle pendant une période d'au moins deux heures au cours de l'étape (b).

7. Procédé selon la revendication 6, dans lequel la température de l'élément est maintenue dans ledit intervalle pendant une période pouvant aller jusqu'à 18 heures au cours de l'étape (b).

8. Procédé selon la revendication 6, dans lequel la température de l'élément est maintenue dans ledit intervalle pendant une période pouvant aller jusqu'à 36 heures au cours de l'étape (b).

9. Procédé selon l'une quelconque des revendications précédentes, dans lequel la température de l'élément est accrue progressivement à la température de trempe au cours de l'étape de chauffage (a), pendant une période comprise entre une demi-heure et une heure et demie.

10. Procédé selon la revendication 9, dans lequel la température de l'élément est accrue progressivement à la température de trempe au cours de l'étape de chauffage (a), pendant une période d'environ une heure.

11. Procédé selon l'une quelconque des revendications précédentes, dans lequel au moins les étapes (a) et (b) sont effectuées dans une atmosphère non oxydante.

12. Procédé selon l'une quelconque des revendications précédentes, dans lequel l'élément peut être refroidi progressivement à environ 200°C pendant l'étape (c), avant un refroidissement rapide pour le porter à la température ambiante.

13. Procédé selon l'une quelconque des revendications précédentes, dans lequel la table de dressage (10) de l'élément d'ébauche comporte une face avant pratiquement plate, une surface périphérique et une surface arrière (12) liée à la surface avant du substrat (11).

14. Procédé selon l'une quelconque des revendications précédentes, dans lequel la table de dressage (21) de l'élément d'ébauche comporte une face avant ayant en général une forme bombée convexe (23) et une surface arrière généralement concave liée à une surface avant ayant en général une forme bombée convexe (24) du substrat (22).

15. Procédé selon la revendication 14, dans lequel la table de dressage (21) de l'élément d'ébauche comprend plusieurs couches (25, 26, 27) de diamant polycristallin.

16. Procédé selon l'une quelconque des revendications précédentes, comprenant en outre les étapes additionnelles ci-dessous:
(d) chauffage de l'élément à une température supérieure à 725°C;
(e) maintien de la température de l'élément au-dessus de 725°C pendant une période ne dépassant pas cinq secondes; et
(f) refroidissement de l'élément à la température ambiante.

17. Procédé selon la revendication 16, dans lequel l'élément est chauffé à une température supérieure à 750°C et inférieure à environ 850°C au cours de l'étape (d).

18. Procédé selon la revendication 16, dans lequel la température de l'élément est maintenue au-dessus de 725°C pendant environ quatre secondes au cours de l'étape (e).

19. Procédé selon l'une quelconque des revendications 16 à 18, dans lequel au moins les étapes (d) et (e) sont effectuées dans une atmosphère non oxydante.
